# EUROPEAN PATENT APPLICATION

(11) **EP 2 442 305 A1**
(43) Date of publication of application: **18.04.2012**
(21) Application number: 11184970.9
(22) Date of filing: 13.10.2011
(51) Int. Cl.: G11B 3/64, G06F 1/16, G11B 20/02

(54) **Method and system for recording analog audio from a vinyl record turntable to a handheld computing device**

(30) Priority: 14.10.2010 US 392984 P; 27.09.2011 US 246189
(71) Applicant: ION Audio LLC, Cumberland, RI 02864 (US)
(72) Inventor: Shim, Brian R., Providence, RI 02903 (US)
(74) Representative: Hofstetter, Alfons J.

(57) **Abstract**

A turntable with a dock for handheld computing devices is disclosed. The turntable includes a housing having a record player with an analog output. An analog-to-digital converter has an analog input operatively connected to the analog output and a digital output. A serial interface device is operatively connected to the digital output of the analog-to-digital converter. A moveable dock connected to the housing is configured and arranged to support a handheld computing device therein.

## Description

### CROSS-REFERENCE TO RELATED APPLICATION

The present patent document claims priority to earlier filed U.S. Provisional Patent Application Serial No. 61/392,984, filed on October 14, 2010.

### BACKGROUND OF THE INVENTION

### 1. Field of the Invention

The present patent document relates generally to vinyl record turntables and more specifically to a method and system for recording analog audio from a vinyl record turntable to a handheld computing device.

### 2. Background of the Related Art

Handheld computing devices, such as AppleⓇ's iPadⓇ, iPodⓇ or iPhoneⓇ, have become popular devices to store and play back music. However, there is no easy way to get music from conventional vinyl records onto handheld computing devices directly without the aid of a personal computer. Handheld computing devices, such as the iPadⓇ for instance, lack analog audio inputs, which prevents music from being recorded directly to the handheld computing device from the vinyl record turntable.

The current method of transferring music from a vinyl record onto a handheld computing device involves using a turntable equipped with a computer serial interface or a conventional turntable with a computer serial interface module coupled to the audio output of the conventional vinyl record turntable.

Specifically, the audio output of the turntable is communicated through the computer serial interface and into a personal computer. The audio input is then captured in digital format by music management software, such as AppleⓇ's iTunesⓇ software. The digital copy of the vinyl record may then be transferred to the handheld computing device by attaching and synchronizing the handheld computing device to the music management software running on the personal computer. As can be ascertained, this method involves multiple steps and requires the use of a personal computer.

Therefore, there is a perceived need in the art for a method and device for transferring music from a vinyl record turntable digitally to a handheld computing device.

### SUMMARY OF THE INVENTION

The present invention solves the problems of the prior art by providing a method and system for recording analog audio from a vinyl record turntable to a handheld computing device. Specifically, a digital way to record analog audio from a vinyl record into a handheld computing device without resort to use of a personal computer to facilitate the transfer is disclosed.

### BRIEF DESCRIPTION OF THE DRAWINGS

These and other features, aspects, and advantages of the present invention will become better understood with reference to the following description, appended claims, and accompanying drawings where:
Fig. 1 is a schematic of a first embodiment of the turntable of the present invention;
Fig. 2 is a schematic of a second embodiment of the turntable of the present invention;
Fig. 3 shows a top perspective view of an embodiment of the turntable of the present invention with a movable dock pivoted to an inward position;
Fig. 4 shows a bottom perspective view of an embodiment of the turntable of the present invention with a movable dock pivoted to an inward position;
Fig. 5 shows a top perspective view of an embodiment of the turntable of the present invention with a movable dock pivoted to an outward position;
Fig. 6 shows a bottom perspective view of an embodiment of the turntable of the present invention with a movable dock pivoted to an outward position;
Fig. 7 shows a front perspective view of the turntable of the present invention with the dock in the inward position and a handheld computing device placed in the dock;
Figs. 8 shows a front perspective view of the turntable of the present invention with a handheld computing device placed in the dock and the dock pivoted to the outward position; and
Fig. 9 shows a front perspective view of the turntable of the present invention with a handheld computing device placed in a landscape orientation in the dock and the dock in the outward position.

### DESCRIPTION OF THE PREFERRED EMBODIMENT

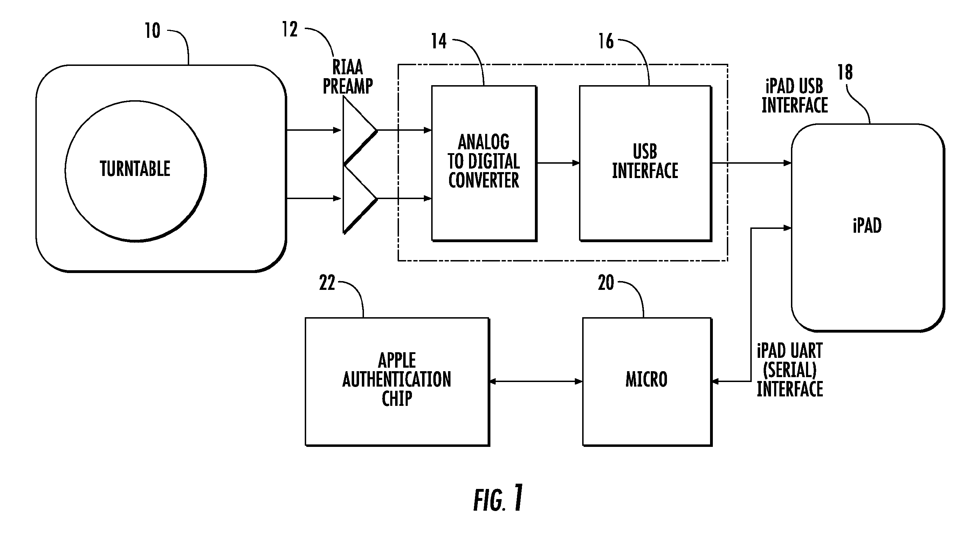

Referring now to Fig. 1, a schematic diagram of the method and system of the present invention is shown generally. The method and system of the present invention includes a vinyl record turntable (or "record player") 10 with a phonoanalog audio output. The analog audio output is connected to a phono preamp (or "RIAAfilter") 12 to provide the proper equalization curve and amplification level of the audio output. The RIAA filter 12 is connected to an analog-to-digital converter 14, which converts the analog stereo signal of the audio output into a digital signal.

The analog-to-digital converter 14 is connected to a serial interface device 16, such as a universal serial bus ("USB") interface device. The serial interface device 16 formats the digital signal into a digital audio format, such as USB audio format, and transmits the formatted digital audio output to handheld computing device's18 USB serial interface, where the digital audio may be recorded to the handheld computing device's 18 memory.

Further provided, a microcontroller 20 may be included to communicate with the handheld computing device 18. Specifically, handheld computing devices 18, such as the AppleⓇ iOSⓇ family of devices, require authentication of the vinyl record turntable 10 as a valid peripheral, and set up of the serial interface device 16 communication link between the handheld computing device 18 and the serial interface device 16.

In the embodiment shown in Fig. 1, the authentication is done through the slow-speed or standard serial interface of the handheld computing device 18 by a microcontroller 20, which also communicates with the authentication chip 22.

In the case where both a USB serial interface and a slow-speed or standard serial interface are present on the handheld computing devices 18, the initial communication (i.e. the authentication process and serial communication setup) with the handheld computing device 18 can be configured to occur through the slow-speed or standard serial interface of the handheld computing device's 18 serial interface or be configured to connect through USB formatted communication with the handheld computing device's 18 USB serial interface.

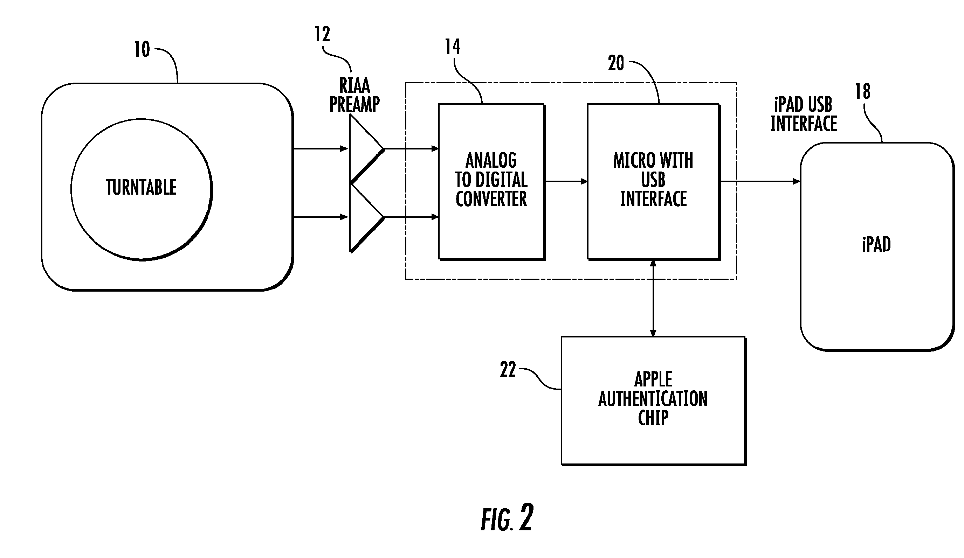

Referring now to Fig. 2, in a second embodiment, all communication is done through USB formatted communication through the handheld computing device's18 USB serial interface. In this embodiment, the microcontroller 20 includes an integrated serial interface 16, which handles all communication to and from the handheld computing device 18 and the authentication chip 22. This microcontroller 20 may also include an integrated analog-to-digital converter 14 as well.

Additionally, a volume control may be located between the RIAA preamp 12 (or at the RIAA preamp) and the analog-to-digital converter 14 to adjust the recording level in either the first or second embodiments shown in Figs. 1 and 2.

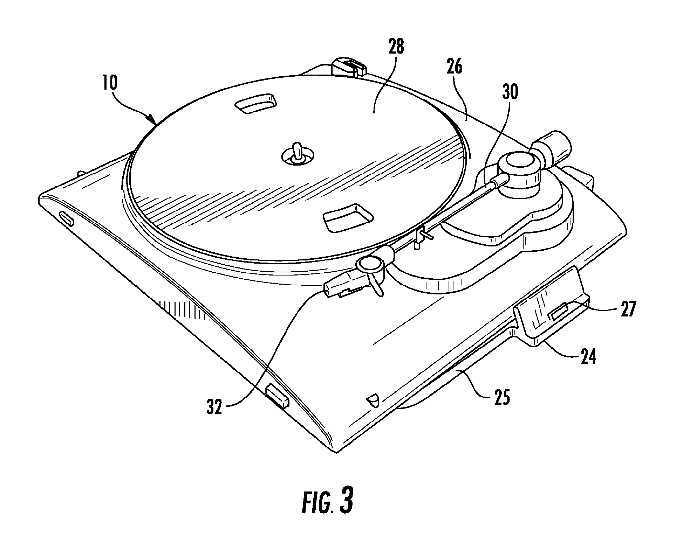

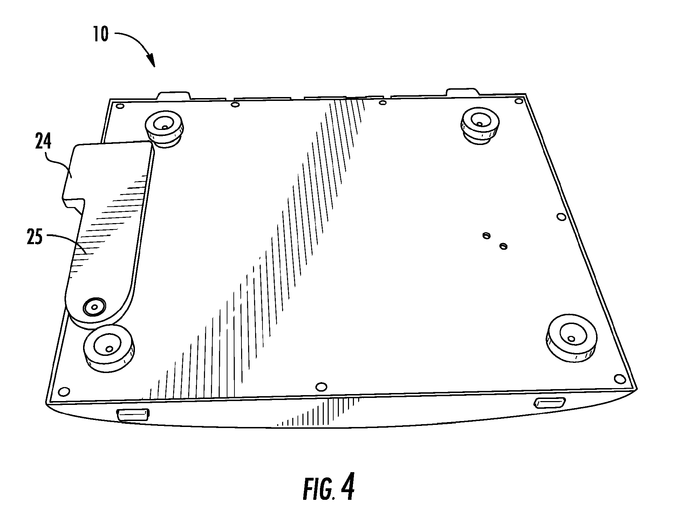

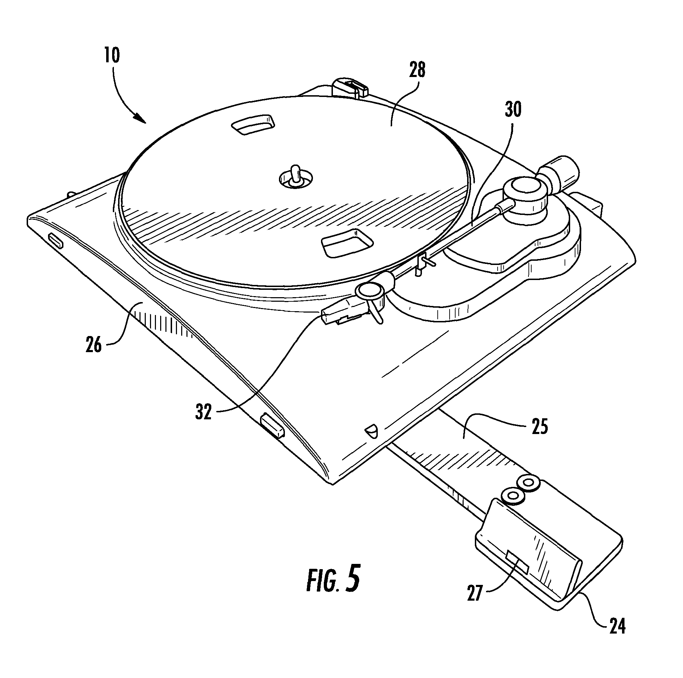

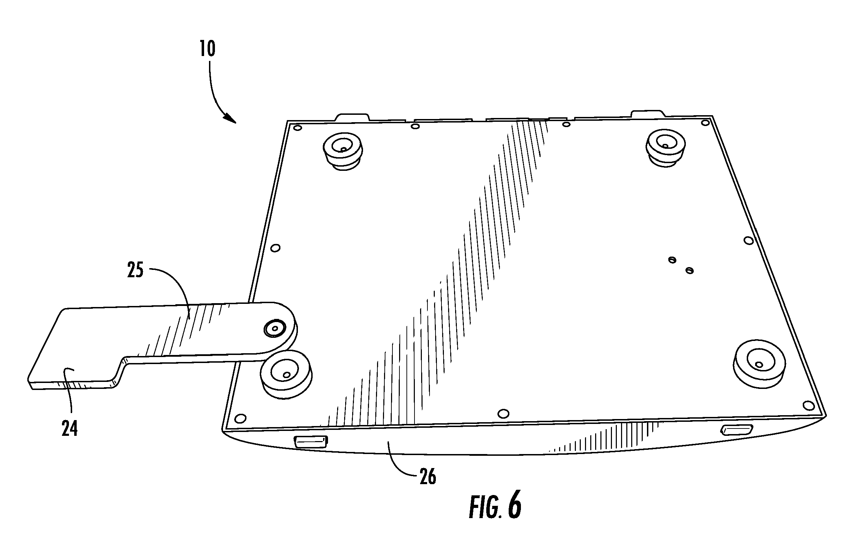

Referring now to Figs. 3-6, a third embodiment of the turntable 10 of the present invention is shown generally. In addition to the features described in the embodiments shown in Figs. 1 and 2, the third embodiment includes a dock 24 for a handheld computing device 18 the pivots between an inward position against the turntable 10 (best seen in Figs. 3 and 4) to and outward position adjacent to the turntable 10 (best seen in Figs. 5 and 6).The dock 24 includes an extended portion 25 to permit larger tablet computers to be used with the dock 24 when the dock is pivoted outwardly. The dock 24 includes a connector 27 to enable serial communications between the handheld computing device 18 and the serial device interface 16 and microcontroller 20.

The turntable 10 includes all the standard features of a conventional record player, i.e. a housing 26, a rotating platter 28 with selectable speed, tone arm 30 with a pickup cartridge 32 connected to the analog audio output, etc. as is well known in the prior art and need not be described in detail herein.

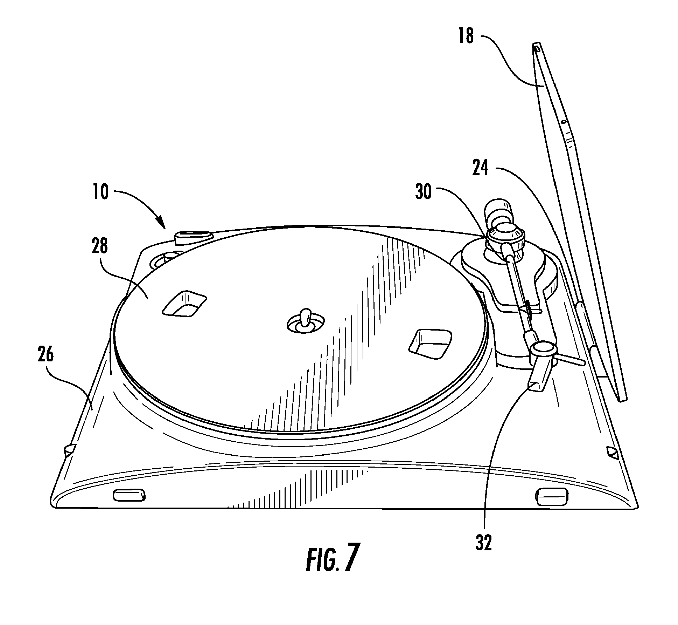

Referring to Fig. 7, a handheld computing device 18 may be placed in the dock 24 when the dock 24 is pivoted to the inward position, which is suitable for swinging the handheld computing device 18 out of the way yet still leaving the handheld computing device 18 connected to the turntable 10 of the present invention.

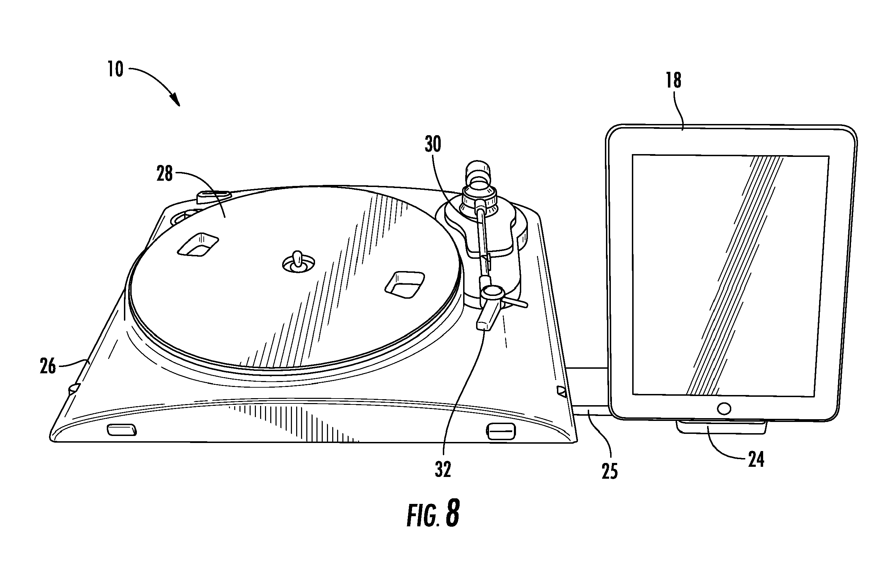

Referring now to Figs. 8, the handheld computing device 18 may be placed in the dock 24 when the dock 24 is pivoted to the outward position. In this arrangement, the user can simultaneously operate the handheld computing device 18 and the turntable 10 with ease because they are both facing the user.

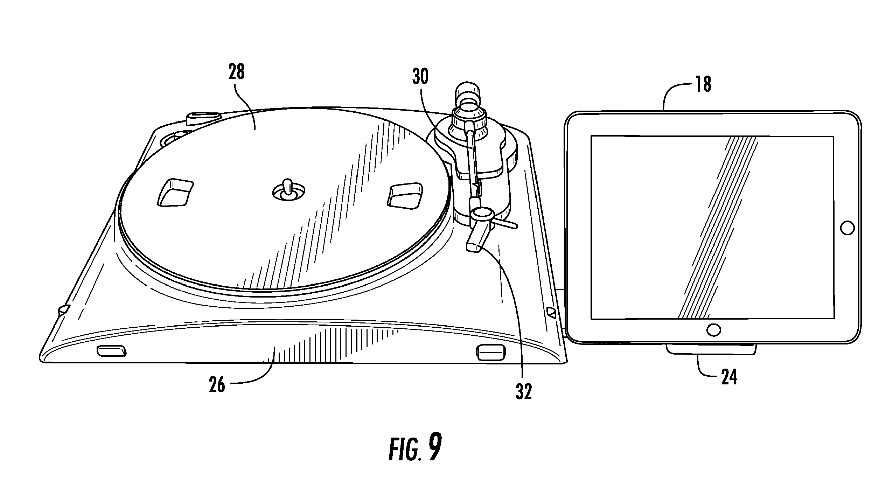

Referring now to Fig. 9, in addition the dock 24 may be further configured and arranged to support a handheld computing device 18 in a landscape orientation.

Note that one advantage of the method and system of the present invention is that the audio output is transmitted to the handheld computing device 18 digitally, and not as an analog signal. This improvement allows the use of better components like analog-to-digital converters 14 that offer superior sound quality.

The method and system of the present invention may be integrated into the housing of a turntable 10 or housed in a separate housing that is external to the turntable 10.

Therefore, it can be seen that the present invention provides a unique solution to the problem of providing a solution to the problem of having analog music on a vinyl record, converting the music to digital format and transferring the digitally formatted music to a handheld computing device without the aid of a personal computer.

It would be appreciated by those skilled in the art that various changes and modifications can be made to the illustrated embodiments without departing from the spirit of the present invention.

## Claims

1. A turntable, comprising:
a housing having a record player with an analog output;
an analog-to-digital converter having an analog input operatively connected to the analog output and a digital output;
a serial interface device operatively connected to the digital output of the analog-to-digital converter; and
a moveable dock connected to the housing configured and arranged to support a handheld computing device therein.

2. The turntable of claim 1, wherein the handheld computing device is a tablet computer.

3. The turntable of claim 1, wherein the moveable dock is configured and arranged to pivot between an inward position against the housing and an outward position adjacent to the housing.

4. The turntable of claim 1, further comprising a preamplifier operatively connected between the analog output and the analog-to-digital converter.

5. The turntable of claim 1, further comprising an authentication chip configured and arranged to enable analog recording on the handheld computing device.

6. The turntable of claim 1, wherein the moveable dock is configured and arranged to support a handheld computing device in a portrait orientation.

7. The turntable of claim 1, wherein the moveable dock is configured and arranged to support a handheld computing device in a landscape orientation

8. The turntable of claim 1, further comprising a microcontroller configured and arranged to communicate with the handheld computing device.

9. The turntable of claim 8, wherein the serial device interfaces is integrated with the microcontroller.

10. The turntable of claim 1, wherein the serial device interface is a universal serial bus interface.
